# EUROPÄISCHE PATENTSCHRIFT

(11) **EP 3 347 216 B1**
(45) Veröffentlichungstag und Bekanntmachung des Hinweises auf die Patenterteilung: **28.04.2021**
(21) Anmeldenummer: 16750102.2
(22) Anmeldetag: 01.08.2016
(51) Int. Cl.: B60G 7/00, B62D 17/00, B60G 17/016, B60G 17/017, B60G 17/018, B60G 21/055, B60G 3/26

(54) **AKTIVES FAHRWERK FÜR EIN ZWEISPURIGES FAHRZEUG**
ACTIVE CHASSIS FOR A TWO-TRACK VEHICLE
CHÂSSIS ACTIF POUR VÉHICULE À DEUX VOIES

(30) Priorität: 12.09.2015 DE 102015011924
(43) Veröffentlichungstag der Anmeldung: 18.07.2018
(73) Patentinhaber: Audi AG, 85045 Ingolstadt (DE)
(72) Erfinder: UNGER, Andreas, 85080 Gaimersheim (DE); SCHMID, Wolfgang, 85354 Freising (DE); SCHAAF, Uli, 85051 Ingolstadt (DE)
(86) Internationale Anmeldenummer: PCT/EP2016/001323
(87) Internationale Veröffentlichungsnummer: WO 2017/041870

(56) Entgegenhaltungen:
- EP-A1- 0 001 009
- EP-A2- 1 997 715
- DE-A1-102008 052 161
- DE-A1-102009 008 833
- DE-A1-102013 211 660
- FR-A1- 2 898 299
- FR-A1- 2 944 995
- JP-A- H05 213 036
- US-A- 4 700 972

## Beschreibung

Die Erfindung betrifft ein aktives Fahrwerk für ein zweispuriges Fahrzeug nach dem Oberbegriff des Patentanspruches 1.

Bei konventionellen Fahrzeugachsen führt eine Änderung des Beladungszustandes zu einer Ein- oder Ausfederung des Fahrzeugaufbaus. In Abhängigkeit von der Bauform der Achse geht die Ein- oder Ausfederung mit einer Sturzwinkel-Verstellung an den Fahrzeugrädern einher.

Die Abhängigkeit zwischen dem Ein- oder Ausfederweg und dem Radsturzwinkel wird in einer sogenannten Sturzkurve definiert, die bei konstruktiven Auslegung der Fahrzeugachse gezielt gestaltet wird. Bei der Auslegung der Sturzkurve müssen diverse Randbedingungen beachtet werden, die das Fahrverhalten bei Lenk- und Bremsmanövern, insbesondere im fahrdynamischen Grenzbereich, beeinflussen. Ferner ist zu beachten, dass aufgrund der Bauform der Achse und der Reifenbeanspruchung nicht beliebige Sturzkurven konstruierbar sind.

Das aktive Fahrwerk kann zudem ein aktives Federungssystem aufweisen, mit dem exemplarisch eine Niveauregulierung und/oder eine Wankstabilisierung des Fahrzeugaufbaus erfolgen kann. Das primäre Ziel eines aktiven Federungssystemes besteht darin, den Fahrzeugaufbau im Fahrbetrieb auf unebenen Straßen zu beruhigen, und/oder in der Horizontierung bzw. Neigung des Fahrzeugaufbaus bei Kurvenfahrten und/oder in der Kompensierung eines Einfederwegs des Fahrzeugaufbaus bei einer Fahrzeug-Zuladung. Bei einer Fahrzeug-Zuladung federt der Fahrzeugaufbau um einen Federweg ein. Durch entsprechend Ansteuerung des Federungssystems kann Niveauregulierung erfolgen, bei der der Fahrzeugaufbau wieder auf das Fahrzeugniveau im unbeladenen Zustand angehoben wird. Diese Niveau-Verstellung geht mit einer Radsturzwinkel-Verstellung einher, die aber bei der Ansteuerung des aktiven Federungssystems meist nicht im Fokus steht. Die Sturzwinkel-Verstellung unterliegt somit zahlreichen Zielkonflikten und kann daher nur stark begrenzt auf einen neuen Beladungszustand optimiert werden.

Ein gattungsgemäßes aktives Fahrwerk weist einen, ein Fahrzeugrad tragenden Radträger auf, der über Lenker am Fahrzeugaufbau angelenkt ist. Das Sturzverhalten des Fahrzeugrads wird dabei durch eine von der Starrkinematik der Lenker vorgegebene mechanische Sturzkurve bestimmt. Die mechanische Sturzkurve definiert eine mechanische Sturzwinkel-Verstellung des Fahrzeugrads in Abhängigkeit von einem Ein- oder Ausfederweg des Fahrzeugaufbaus. Bei einer Zuladung wird daher der Fahrzeugaufbau um einen Federweg eingefedert, und zwar mit einer Sturzwinkel-Verstellung, die von der mechanischen Sturzkurve vorgegeben ist. Zudem weist das gattungsgemäße Fahrwerk einen Sturzaktor auf, der von einem Fahrwerk-Steuergerät in Abhängigkeit einer Vielzahl von Fahrbetriebsparametern ansteuerbar ist und - zusätzlich zur mechanischen Sturzwinkel-Verstellung - eine aktive Sturzwinkel-Verstellung vornehmen kann

Die US 4 700 972 offenbart ein aktives Fahrwerk gemäß dem Oberbegriff des Anspruchs 1.

Die FR 2 944 995 A1, DE 10 2008 052 161 A1, EP 0 001 009 A1, FR 2 898 299 A1 offenbaren anderen aktiven Fahrwerke.

Die Aufgabe der Erfindung besteht darin, ein aktives Fahrwerk für ein zweispuriges Fahrzeug bereitzustellen, bei dem das Sturzverhalten der Fahrzeugräder bei unterschiedlichen Fahrzeug-Beladungszuständen in einfacher Weise verbessert werden kann.

Die Aufgabe ist durch die Merkmale des Patentanspruches 1 oder 9 gelöst. Bevorzugte Weiterbildungen der Erfindung sind in den Unteransprüchen offenbart.

Gemäß dem kennzeichnenden Teil des Patentanspruches 1 ist dem Fahrwerk-Steuergerät eine Auswerteeinheit mit einer Beladungssensorik zugeordnet, die eine Änderung des Fahrzeug-Beladungszustandes erfasst. Die Auswerteeinheit steuert in Abhängigkeit von der Änderung des Beladungszustandes den Sturzaktor an, um den stationären Sturzwinkel und/oder den Sturzgradienten des jeweiligen Fahrzeugrads über die Ein- oder Ausfederung sowie unabhängig von der Achsbauweise von eventuell verbauten aktiven Federungssystemen einzustellen. Mittels der Auswerteeinheit kann das Sturzverhalten auf den neuen Beladungszustand angepasst werden, und zwar so, dass das durch die Zuladung/Entladung geänderte Gierverhalten des Fahrzeugs kompensierbar ist.

Die Auswerteeinheit steuert den Sturzaktor bei einer Änderung des Beladungszustandes derart an, dass bei einer Zuladung der Betrag des negativen Radsturzwinkels erhöht wird (im Vergleich zu einer rein mechanischen Sturzwinkel-Verstellung) und/oder der Sturzgradient über den Einfederweg an der Hinterachse reduziert wird, um die Fahrsicherheit zu steigern. Generell ist mittels der Auswerteeinheit das Sturzverhalten bei Vorliegen einer Beladungs-Änderung frei einstellbar.

In einer technischen Umsetzung ist die Auswerteeinheit ein Softwaremodul des Fahrwerk-Steuergerätes. Die Auswerteeinheit ermittelt auf der Grundlage eines von der Beladungssensorik erfassten Ist-Beladungszustands eine Aktor-Sturzkurve, die eine aktive Sturzwinkel-Verstellung des jeweiligen Fahrzeugrads in Abhängigkeit von einem (aufgrund des geänderten Beladungszustandes erfolgenden) Federweg des Fahrzeugaufbaus definiert. Die Auswerteeinheit überlagert durch Sturzaktor-Ansteuerung die Aktor-Sturzkurve der mechanischen Sturzkurve, wodurch sich eine Gesamt-Sturzkurve ausbildet, die die Sturzwinkel-Verstellung am Fahrzeugrad wiedergibt.

Zur Ermittlung des Ist-Beladungszustandes werden erfindungsgemäß mittels der Beladungssensorik das aktuelle Fahrzeuggewicht und die Lage des Fahrzeug-Schwerpunkts ermittelt . Exemplarisch können ausgehend von einem unbeladenen Fahrzeug die Masse der Zuladung sowie die Lage des Zuladungs-Schwerpunktes ermittelt und diese als Eingangsparameter an die Auswerteeinheit weitergeleitet werden. Auf deren Grundlage bestimmt die Auswerteeinheit die Aktor-Sturzkurve.

Als weiteren Eingangsparameter erfasst die Auswerteeinheit den mit der Änderung des Beladungszustandes einhergehenden Ein- oder Ausfederweg. Auf der Grundlage des erfassten Ein- oder Ausfederwegs und der in der Auswerteeinheit hinterlegten Aktor-Sturzkurve wird erfindungsgemäß ein Sturzwinkel-Signal generiert, mit dem der Sturzaktor des Fahrzeugrads ansteuerbar ist.

Das aktive Fahrwerk kann zusätzlich ein aktives Federungssystem mit einer Stelleinheit aufweisen, die zwischen dem Fahrzeugaufbau und Radführungselementen (das heißt dem Radträger oder den Lenkern) wirkt. Die Stelleinheit ist in Kombination mit dem Sturzaktor oder davon unabhängig vom Fahrwerk-Steuergerät ansteuerbar und wird insbesondere für eine Niveauregulierung und/oder eine Wankstabilisierung des Fahrzeugaufbaus eingesetzt. Beispielhaft kann die Stelleinheit eine zwischen dem Fahrzeugaufbau und den Radführungselementen abgestützte Luftfeder sein. Alternativ dazu kann die Stelleinheit eine Drehstabfeder-Anordnung sein. Eine solche Anordnung weist einen karosserieseitig befestigten Drehaktor auf, der über einen Drehstab sowie einen daran angeformten Abtriebshebel gelenkig mit zum Beispiel einem Radlenker der Radaufhängung verbunden ist. Bei Ansteuerung des Drehaktors wird der Drehstab auf Torsion beansprucht, wodurch dieser eine Vorspannkraft auf den Radlenker ausübt. Die Ansteuerung des Drehaktors erfolgt während des Fahrbetriebs, um bei unebenen Straßen den Fahrzeugaufbau zu beruhigen und/oder für eine Wankstabilisierung des Fahrzeugaufbaus.

In einer technischen Realisierung kann der Sturzaktor ein aktiver Lenker sein, der zwischen dem Radträger und dem Fahrzeugaufbau abgestützt ist und der bei entsprechender Ansteuerung durch das Fahrwerk-Steuergerät teleskopartig längenverstellbar ist. Alternativ dazu kann der Sturzaktor bauraumgünstig unmittelbar dem Radträger zugeordnet sein. In diesem Fall kann der Radträger zum Beispiel zweiteilig ausgebildet sein, und zwar mit einem radseitigen, das Fahrzeugrad tragenden Tragelement und einem achsseitigen Tragelement, das über die Lenker am Fahrzeugaufbau angelenkt ist. Zwischen den beiden Tragelementen kann der Sturzaktor angeordnet sein. Bevorzugt kann der Sturzaktor ein radseitiges Drehteil und ein achsseitiges Drehteil aufweisen, die um ihre Drehachsen zueinander verdrehbar sind. Das radseitige Drehteil kann beim Verdrehen zumindest eines der Drehteile mit einer Taumelbewegung ausgelenkt werden, und zwar unter Einstellung des Radsturzwinkels. Die beiden Drehteile des Sturzaktors können über zumindest einen Elektromotor betätigbar sein, der von der Auswerteeinheit des Fahrwerk-Steuergerätes ansteuerbar ist.

Die Drehachse des radseitigen Drehteils kann in einer technischen Ausführung des zweiteiligen Radträgers um einen Neigungswinkel gegenüber der Drehachse des achsseitigen Drehteils schräggestellt sein. Das radseitige Drehteil kann daher mit seiner Mittelachse in einer Taumelbewegung mit veränderlichem Schwenkwinkel um die Drehachse des achsseitigen Drehteils gedreht werden. Im Hinblick auf den Aufbau und die Funktionsweise eines derartigen, in einem zweiteiligen Radträger integrierten Sturzaktors wird auf das in der DE 10 2009 008 833 A1 offenbarte Stellglied verwiesen.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer schematischen Darstellung eine Radaufhängung eines aktiven Fahrwerks für ein zweispuriges Fahrzeug;

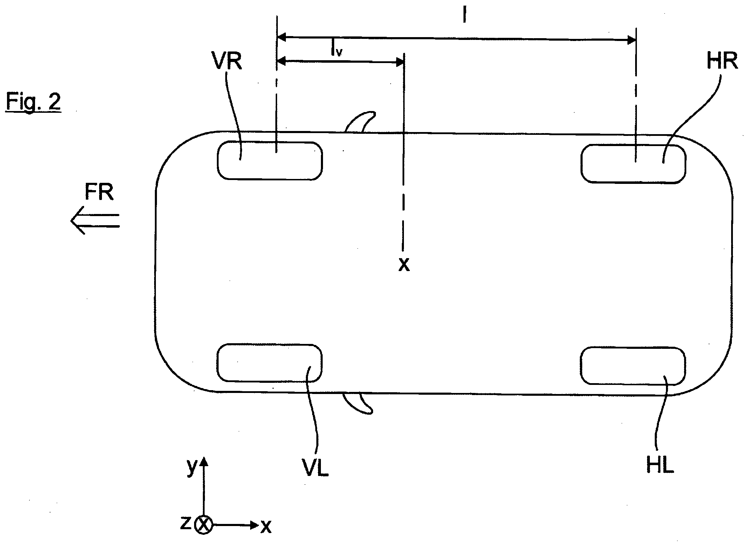

- Fig. 2: in einer Grundriss-Ansicht das zweispurige Fahrzeug;
- Fig. 3: ein Blockschaltdiagramm, das eine Software-Architektur in dem Fahrwerk-Steuergerät andeutet;
- Fig. 4: ein Sturzkurven-Diagramm, das die Wirkungsweise der Erfindung veranschaulicht; und
- Fig. 5 bis 7: Ersatzmodelle von unterschiedlichen Fahrwerkskonfigurationen.

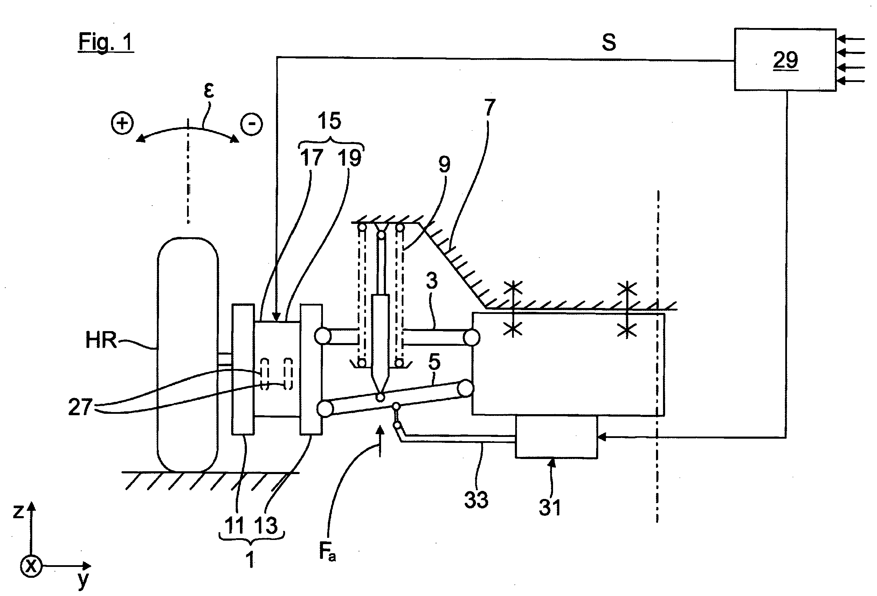

In der Fig. 1 ist in einer Teilansicht ein aktives Fahrwerk für ein zweispuriges Fahrzeug gezeigt, das exemplarisch einen, das rechte Hinterrad HR tragenden Radträger 1 aufweist, der mittels oberer und unterer Querlenker 3, 5 am Fahrzeugaufbau 7 angebunden ist. Die Querlenker 3, 5 sind jeweils an aufbauseitigen und radträgerseitigen Schwenklagerstellen angelenkt. Zwischen dem unteren Querlenker 5 und dem Fahrzeugaufbau 7 ist in üblicher Weise ein Federbein 9 mit einer Tragfeder sowie einem Schwingungsdämpfer abgestützt.

In der Fig. 1 ist der Radträger 1 zweiteilig aus einem radseitigen Tragelement 11 und einem achsseitigen Tragelement 13 aufgebaut. Am radseitigen Tragelement 11 ist das Hinterrad HR drehgelagert. Außerdem kann am radseitigen Tragelement 11 eine nicht dargestellte Bremsanlage angebracht sein. Am achsseitigen Tragelement 13 sind die beiden Querlenker 3, 5 über Lenkerlager angelenkt.

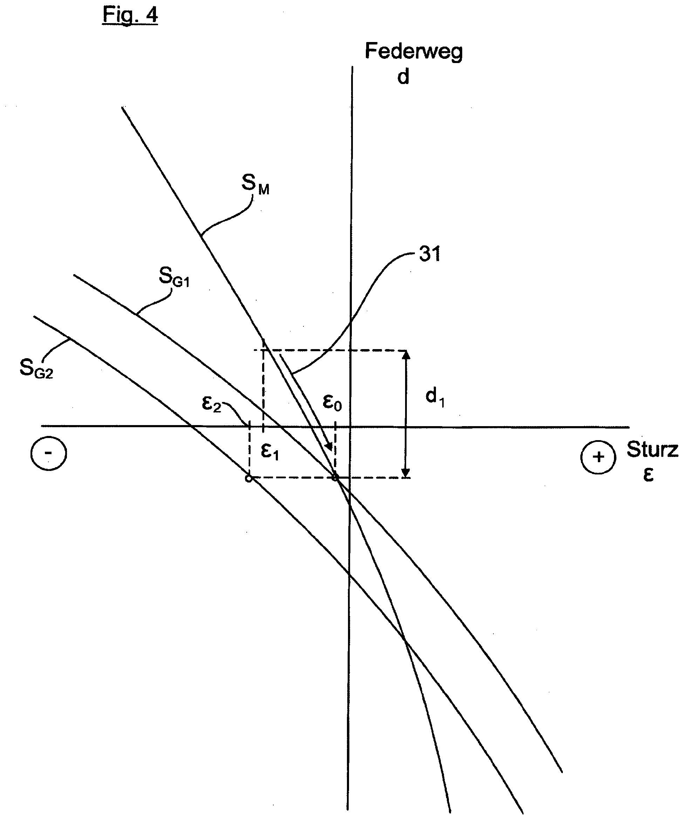

Das mechanische Sturzverhalten des Fahrzeugrads HR wird durch eine, von der Starrkinematik der Lenker 3, 5 vorgegebene mechanische Sturzkurve S_{M} (Fig. 4) bestimmt, die eine mechanische Sturzwinkel-Verstellung des Fahrzeugrads HR in Abhängigkeit von einem Ein- oder Ausfederweg d des Fahrzeugaufbaus 7 definiert. Bei einer Fahrwerkskonfiguration mit der in der Fig. 4 gezeigten mechanischen Sturzkurve S_{M} führt eine Erhöhung der Fahrzeug-Gesamtmasse zu einer betragsmäßigen Erhöhung des (negativen) statischen Sturzes, was insbesondere bei passiven Achsen sinnvoll ist.

Zusätzlich zur mechanischen Sturzverstellung ist eine aktive Sturzverstellung mittels eines Sturzaktors 15 bereitstellbar, der den beiden Tragelementen 11, 13 zwischengeschaltet ist. Der Sturzaktor 15 weist ein radseitiges Drehteil 17 und ein achsseitiges Drehteil 19 auf. Die beiden Drehteile 17, 19 des Sturzaktors 15 sind über schräggestellte Steuerflächen miteinander in Anlage. Die Steuerflächen befinden sich in einer Drehebene, in der sie exemplarisch in Gleitkontakt aufeinander verschiebbar gelagert sind. Die Drehteile 17, 19 sind jeweils um ihre Drehachsen drehbar zwischen den beiden Tragelementen 17, 19 gelagert. In der Fig. 1 ist die Drehachse des radseitigen Drehteils 17 in der Fahrzeugquerrichtung y axial fluchtend ausgerichtet sowie koaxial zu einer Drehachse des achsseitigen Drehteils 19. Bei einer Drehbetätigung zumindest eines der Drehteile 17, 19 bewegt sich das radseitige Drehteil 17 in einer Taumelbewegung mit veränderlichen Schwenkwinkel um die Radachse, wodurch der Sturzwinkel ε am Hinterrad HR aktiv verstellt wird.

Die beiden Drehteile 17, 19 sind über Elektromotoren 27 ansteuerbar, die in Signalverbindung mit einem Fahrwerk-Steuergerät 29 stehen. Im Fahrbetrieb generiert das Fahrwerk-Steuergerät 29 in Abhängigkeit einer Vielzahl von Fahrbetriebsparameter ein Steuersignal S, mit dem die Elektromotoren 27 des Sturzaktors 15 für eine aktive Sturzwinkel-Verstellung ansteuerbar sind.

Zudem ist das Fahrwerk-Steuergerät 29 mit einer Stelleinheit 31 eines aktiven Federungssystems in Signalverbindung. In der Fig. 1 ist die Stelleinheit 31 exemplarisch eine Drehstabfeder-Anordnung. Diese weist einen Drehaktor 31 auf, der am Fahrzeugaufbau 7 montiert ist und über einen Torsionsstab 33 in trieblicher Verbindung mit dem unteren Querlenker 5 der Radaufhängung ist. Durch entsprechende Ansteuerung des Drehaktors 31 kann der untere Querlenker 5 mit einer Aktor-Kraft F_{A} beaufschlagt werden, und zwar für zum Beispiel Niveauregulierung und/oder eine Wankstabilisierung des Fahrzeugaufbaus 7 im Fahrbetrieb.

Die in der Fig. 1 gezeigte Radaufhängung ist beispielhaft für das rechte Hinterrad HR dargestellt. Die Radaufhängungen der weiteren Fahrzeugräder HL sowie VL und VR sind identisch aufgebaut, so dass jedem der Fahrzeugräder jeweils ein Sturzaktor 15 sowie eine Stelleinheit 31 zugeordnet, die jeweils vom Fahrwerk-Steuergerät 29 ansteuerbar sind.

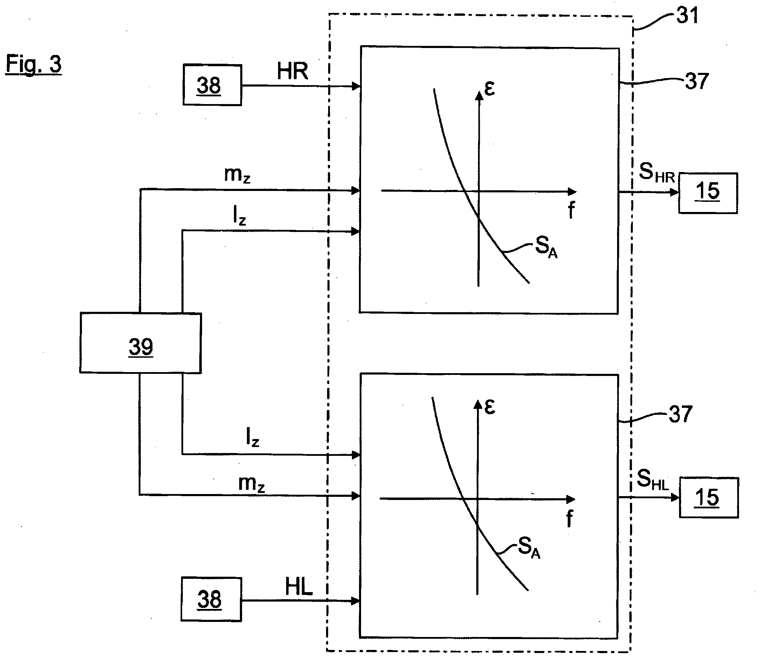

In der Fig. 3 weist das Steuergerät 29 für jedes der hinteren Fahrzeugräder HL, HR eine Auswerteeinheit 37 auf, mittels der bei einer Änderung des Fahrzeug-Beladungszustandes eine Sturzwinkel-Verstellung beeinflussbar ist. Den Vorderrädern VL, VR sind ebenfalls Auswerteeinheiten 37 zugeordnet, die jedoch in der Fig. 3 für eine vereinfachte Darstellung weggelassen sind.

Jede der Auswerteeinheiten 37 ist mit einer Beladungssensorik 39 in Signalverbindung, mittels der ein Ist-Beladungszustand des Fahrzeuges erfassbar ist. Hierzu erfasst die Beladungssensorik 39 das Zuladungsgewicht m_{Z} sowie die Längsposition l_{z} des Zuladungs-Schwerpunktes. Auf der Grundlage des Ist-Beladungszustandes legt die Auswerteeinheit 37 eine Aktor-Sturzkurve S_{A} fest. Zudem ist jede der Auswerteeinheiten 37 mit einer Federweg-Sensorik 38 in Signalverbindung, mit der ein Federweg d_{HR} und d_{HL} erfassbar ist, der sich aufgrund der Zuladung an den Hinterrädern HR, HL ergibt. Die Auswerteeinheit 37 generiert auf der Grundlage der Aktor-Sturzkurve S_{A} und des Federwegs d_{HR}, d_{HL} ein Sturzwinkel-Signal S_{HL}, S_{HR}, mit dem der Sturzaktor 15 am rechten und linken Hinterrad HL, HR ansteuerbar ist. Auf diese Weise wird der mechanischen Sturzkurve S_{M}, die alleine durch die Starrkinematik der Lenker 5, 7 vorgegeben ist, zusätzlich die von der Auswerteeinheit 37 frei einstellbare Aktor-Sturzkurve S_{A} aufgeprägt, wodurch das Sturzverhalten, das heißt der Sturzwinkel und der Sturzgradient, den jeweils aktuellen Beladungszustand anpassbar ist zur Steigerung der Fahrsicherheit.

Die Arbeitsweise der Auswerteeinheit 37 wird nachfolgend anhand des Sturzkurven-Diagramms aus der Fig. 4 veranschaulicht: So zeigt das Diagramm der Fig. 4 eine mechanische Sturzkurve S_{M}, die alleine durch die Starrkinematik der Querlenker 5, 7 definiert ist. Mittels der Auswerteeinheit 37 wird der mechanischen Sturzkurve S_{M} eine in der Fig. 4 nicht gezeigte Aktor-Sturzkurve S_{A} aufgeprägt, wodurch sich eine am Fahrzeugrad HR wirkende Gesamt-Sturzkurve S_{G1} ergibt.

Das Zusammenspiel des Sturzaktors 15 und der Stelleinheit 31 ist nachfolgend für den Fall einer Zuladung in ein unbeladenes Fahrzeug beschrieben: In diesem Fall wird der Fahrzeugaufbau 7 in der Fig. 4 um einen Federweg d₁ eingefedert. Dadurch ergibt sich eine von der mechanischen Sturzkurve S_{M} vorgegebene mechanische Sturzwinkel-Verstellung von einem Sturzwinkel ε₀ auf einen Sturzwinkel ε₁. Durch eine (mit einem Pfeil 31 veranschaulichte) Ansteuerung der Stelleinheit 31 des aktiven Federungssystems erfolgt im Stand der Technik eine Niveauregulierung, bei der der Fahrzeugaufbau 7 um den Federweg d₁ wieder auf das Fahrzeugniveau im unbeladenen Zustand angehoben wird. Diese Niveauregulierung kann in der technischen Realisierung dem Einfedervorgang überlagert sein.

Die oben beschriebene Niveau-Verstellung geht also mit einer Sturzwinkel-Verstellung von dem Sturzwinkel ε₁ auf den Sturzwinkel ε₀ einher, die ggf. nachteilig für die Fahrsicherheit ist. Zur Steigerung der Fahrsicherheit kann der mechanischen Sturzkurve S_{M} eine Aktor-Sturzkurve S_{A} aufgeprägt werden. Die Aktor-Sturzkurve S_{A} ist so ausgelegt, dass sich eine am Hinterrad HR wirkende Gesamt-Sturzkurve S_{G1} ergibt, die einen - im Vergleich zur mechanische Sturzkurve S_{M} - reduzierten Sturzgradienten bereitstellt.

Alternativ dazu kann in der Auswerteeinheit 37 eine Aktor-Sturzkurve S_{A} generiert werden, aus der sich eine am Hinterrad HR wirkende Gesamt-Sturzkurve S_{G2} (Fig. 4) ergibt. Die Sturzkurve S_{G2} ist in der Fig. 4 gegenüber der Sturzkurve S_{G1} parallel nach links verschoben. D.h. dass nicht nur ein - im Vergleich zur mechanischen Sturzkurve - reduzierter Sturzgradient, sondern auch einen im Betrag vergrößerter negativer Sturzwinkel ε₂ bereitstellt ist.

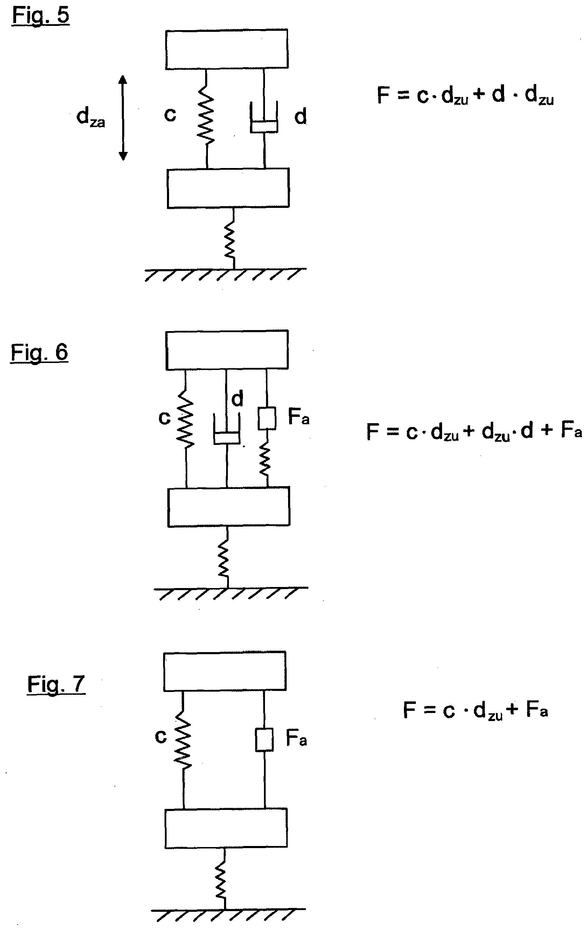

Bei der obigen Zuladung werden in der Beladungssensorik 39 die zusätzliche Masse sowie die Längsposition des Zuladungs-Schwerpunktes bestimmt. Die Funktionsweise der Beladungssensorik 39 beruht auf der Bestimmung der Fahrwerk wirkenden Vertikalkräfte und ist abhängig von der Fahrwerkskonfiguration. In den Fig. 5 bis 7 sind Berechnungsmethoden für die vertikal wirkende Gesamtkraft F exemplarisch für drei unterschiedliche Fahrwerkskonfigurationen angedeutet. Hierbei ist c die bekannte Federkonstante der Tragfeder, d das bekannte Dämpfungsmaß des Schwingungsdämpfers, Fₐ die bekannte Aktorkraft der Stelleinheit 10 und d_{Zu} der gemessene Federweg. Die Kräfte werden für jedes Fahrzeugrad separat bestimmt. Um dynamische Einflüsse herauszurechnen, die durch das Überfahren von Unebenheiten entstehen, werden die Vertikalkräfte signaltechnisch durch einen sehr langsamen Tiefpassfilter gefiltert. Typische Zeitkonstanten des Tiefpassfilters liegen im Bereich von 5 Sekunden.

Wird etwa die Zuladung im Fahrzeug nach hinten verschoben, so erfasst die Beladungssensorik 39 einen neuen aktuellen Beladungszustand. Auf dieser Grundlage ermittelt die Auswerteeinheit 37 eine Aktor-Sturzkurve S_{A}, die zu einer Erhöhung des am Fahrzeugrad wirkenden Sturzkurve-Gradient führt, was zu einem stabileren Fahrverhalten im fahrdynamischen Grenzbereich beiträgt. Dies wirkt der erhöhten Übersteuertendenz des Fahrzeugs durch das zusätzliche Gewicht an der Hinterachse entgegen.

## Patentansprüche

1. Aktives Fahrwerk für ein zweispuriges Fahrzeug, mit einer Radaufhängung, bei der ein, ein Fahrzeugrad (HR) tragender Radträger (1) über Lenker (3, 5) am Fahrzeugaufbau (7) angelenkt ist, wobei das Sturzverhalten des Fahrzeugrads (HR) durch eine von der Starrkinematik der Lenker (3, 5) vorgegebene mechanische Sturzkurve (S_{M}) bestimmt ist, die eine mechanische Verstellung des Sturzwinkels (ε) des Fahrzeugrads (HR) in Abhängigkeit von einem Federweg (d) des Fahrzeugaufbaus (7) definiert, und mit einem Sturzaktor (15), der von einem Fahrwerk-Steuergerät (29) ansteuerbar ist zur Durchführung einer aktiven Sturz-Winkelverstellung, so dass bei einer Änderung des Fahrzeug-Beladungszustands (m_{z}, l_{z}) der Fahrzeugaufbau (7) um einen Federweg (d) ein- oder ausfedert, und zwar mit dazu korrespondierender mechanischer Sturzwinkel-Verstellung, wobei zur Ansteuerung des Sturzaktors (15) dem Steuergerät (29) eine Auswerteeinheit (37) zugeordnet ist, die bei der Änderung des Beladungszustands (m_{z}, l_{z}) den Sturzaktor (15) ansteuert, um der mechanischen Sturzwinkel-Verstellung durch eine aktive Sturzwinkel-Verstellung zumindest teilweise entgegenzuwirken oder um die mechanische Sturzwinkel-Verstellung zu unterstützen, wobei die Auswerteeinheit (27) auf der Grundlage des aktuellen Beladungszustands des Fahrzeugs eine Aktor-Sturzkurve (S_{A}) ermittelt, dass die Auswerteeinheit (37) durch Ansteuerung des Sturzaktors (15) der mechanischen Sturzkurve (S_{M}) die Aktor-Sturzkurve (S_{A}) aufprägt, und zwar unter Bildung einer Gesamt-Sturzkurve (S_{G1}, S_{G2}), **dadurch gekennzeichnet, dass** zur Ermittlung des aktuellen Beladungszustands (m_{z}, l_{z}) der Auswerteeinheit (37) eine Beladungssensorik (39) zugeordnet ist, mittels der das Fahrzeug- bzw. Zuladungsgewicht (m_{z}) und die Lage (lᵥ) des Fahrzeug-bzw. Zuladungsschwerpunkts ermittelbar ist, die als Eingangsparameter von der Auswerteeinheit (37) erfassbar sind und auf deren Grundlage die Auswerteeinheit (37) die Aktor-Sturzkurve (S_{A}) festlegt, dass die Auswerteeinheit (37) als weiteren Eingangsparameter den Federweg (d) bei einer Zu- oder Entladung des Fahrzeugs erfasst, und dass die Auswerteeinheit (37) auf der Grundlage des Federwegs (d) und der Aktor-Sturzkurve (S_{A}) ein Sturzwinkel-Signal (S) generiert, mit dem der Sturzaktor (15) ansteuerbar ist.

2. Aktives Fahrwerk nach Anspruch 1, **dadurch gekennzeichnet, dass** das Fahrwerk eine zwischen dem Fahrzeugaufbau (7) und Radführungselementen, das heißt Radträger (1) oder Lenker (3, 5), wirkende Stelleinheit (31) aufweist, die zur Niveauregulierung und/oder Wankstabilisierung des Fahrzeugaufbaus (7) einsetzbar ist, und dass die Stelleinheit (31) vom Fahrwerk-Steuergerät (29) ansteuerbar ist, und zwar alleine oder in Kombination mit dem Sturzaktor (15).

3. Aktives Fahrwerk nach Anspruch 1 oder 2, **dadurch gekennzeichnet, dass** der Sturzaktor (15) dem Radträger (1) zugeordnet ist, und dass der Radträger (1) zweiteilig ausgebildet ist mit einem radseitigen, das Fahrzeugrad (HR) tragenden Tragelement (11) und einem achsseitigen Tragelement (13), das über die Lenker (3, 5) am Fahrzeugaufbau (7) angelenkt ist, und dass zwischen den Tragelementen (11, 13) der Sturzaktor (15) angeordnet ist.

4. Aktives Fahrwerk nach Anspruch 3, **dadurch gekennzeichnet, dass** der Sturzaktor (15) ein radseitiges Drehteil (17) und ein achsseitiges Drehteil (19) aufweist, die um ihre Drehachsen (21, 23) zueinander verdrehbar sind, und dass das radseitige Drehteil (17) beim Verdrehen zumindest eines der Drehteile (17, 19) in einer Taumelbewegung gegenüber dem achsseitigen Drehteil (19) verstellbar ist, und zwar unter Sturzwinkel-Verstellung, und dass die Drehteile (17, 19) über zumindest einen, von dem Steuergerät (29) ansteuerbaren Elektromotor (27) verdrehbar sind.

5. Aktives Fahrwerk nach Anspruch 3, **dadurch gekennzeichnet, dass** der Sturzaktor (15) ein Linearsteller oder ein aktiver Lenker ist, der zwischen dem Radträger (1) und dem Fahrzeugaufbau (7) abgestützt ist, und dass der Linearsteller bei einer Ansteuerung durch das Fahrwerk-Steuergerät (29) teleskopartig längenverstellbar ist.

6. Verfahren zum Betreiben eines aktiven Fahrwerks für ein zweispuriges Fahrzeug nach einem der vorhergehenden Ansprüche.

## Claims

1. Active chassis for a dual-track motor vehicle provided with a wheel suspension, wherein a wheel carrier (1) supporting a vehicle wheel (HR) is connected via connecting rods (3, 5) to a vehicle structure (7), wherein the camber behaviour of the vehicle wheel (HR) is determined by a mechanical camber curve (S_{M}) predetermined by the rigid kinematics of the connecting rods (3, 5) which defines a mechanical adjustment of the camber curve (ε) of the vehicle wheel (HR) as a function of a spring path (d) of the vehicle structure (7), and with a camber actuator (15) which can be controlled by a chassis control device (29) for carrying out an active camber angle adjustment, so that with a change of the vehicle loading state (m_{z}, l_{z}) the vehicle structure (7) compresses or decompresses by a spring path (d), and with a corresponding adjustment of the mechanical camber angle, wherein in order to control the camber actuator (15), an evaluating unit (37) is assigned to the chassis control device (29) which controls the camber actuator (15) when the loading state (m_{z}, l_{z}) is changed, in order to counteract at least partially the mechanical camber angle adjustment with an active camber angle adjustment, or in order to support the mechanical camber angle adjustment, wherein the evaluating unit (27) determines an actuator camber curve (S_{A}) on the basis of the current loading state of the vehicle, wherein the evaluating unit (37) influences the actuator camber curve (S_{A}) by controlling the camber actuator (15) of the mechanical camber curve (S_{M}), creating a total camber curve (S_{G1}, S_{G2}), **characterised in that** to determine the actual loading state (m_{z}, l_{z}) a loading sensor system (39) is assigned to the evaluating unit (37), by means of which the vehicle weight or additional load (m_{z}) and the position (lᵥ) of the vehicle or additional load centre of gravity can be determined, which can be detected as input parameters obtained by the evaluating unit (37), and on the basis of which the evaluating unit (37) determines the actuator camber curve (S_{A}), **in that** the evaluating unit (37) as an additional input parameter detects the spring path (d) on loading or unloading the vehicle, and **in that** the evaluating unit (37) on the basis of the spring path (d) and the actuator camber curve (S_{A}) generates a camber angle signal (S), by means of which the camber actuator (15) can be controlled.

2. Active chassis according to claim 1, **characterised in that** the chassis is provided with an actuating unit (31) operating between the vehicle structure (7) and wheel guiding elements, i.e. wheel carriers (1) or connecting rods (3, 5), which actuating unit can be used for controlling the level and/or for roll stabilisation of the vehicle structure (7), and **in that** the actuating unit (31) can be controlled by the chassis control device (29), either alone or in combination with the camber actuator (15).

3. Active chassis according to claim 1 or 2, **characterised in that** the camber actuator (15) is associated with the wheel carrier (1), and **in that** the wheel carrier (1) is formed in two parts with a wheel-side support element (11) supporting the vehicle wheel (HR) and an axle-side support element (13) which is connected via the connecting rods (3, 5) to the vehicle structure (7), and **in that** the camber actuator (15) is arranged between the support elements (11, 13).

4. Active chassis according to claim 3, **characterised in that** the camber actuator (15) is provided with a wheel-side rotary part (17) and an axle-side rotary part (19), which are rotatable relative to each other about their axes (21, 23) of rotation and **in that** the wheel-side rotary part (17) is adjustable during rotation of at least one of the rotary parts (17, 19) in a wobbling movement relative to the axle-side rotary part (19), and with a camber angle adjustment, and **in that** the rotary parts (17, 19) are rotatable by at least one electric motor (27) which can be controlled by the control device (29).

5. Active chassis according to claim 3, **characterised in that** the camber actuator (15) is a linear actuator or an active connecting rod, which is supported between the wheel carrier (1) and the vehicle structure (7), and **in that** the linear actuator is telescopically adjustable in length by the chassis control device (29).

6. Method for operating an active chassis for a dual-track vehicle according to any of the preceding claims.

## Revendications

1. Châssis actif pour un véhicule à deux voies, avec une suspension de roue dans laquelle un support de roue (1) portant une roue de véhicule (FIR) est articulé sur la carrosserie de véhicule (7) par l'intermédiaire de bielles (3, 5), dans lequel le comportement de carrossage de la roue de véhicule (HR) est déterminé par une courbe de carrossage mécanique (S_{M}) prédéterminée par la cinématique rigide des bielles (3, 5), qui définit un réglage mécanique de l'angle de carrossage (ε) de la roue de véhicule (HR) en fonction d'un débattement (d) de la carrosserie de véhicule (7), et avec un actionneur de carrossage (15) qui peut être actionné par un dispositif de commande de châssis (29) pour effectuer un réglage actif d'angle de carrossage, de sorte qu'en cas de modification de l'état de charge de véhicule (m_{z}, l_{z}), la carrosserie de véhicule (7) se compresse ou se détend par un débattement (d), notamment avec un réglage mécanique d'angle de carrossage correspondant, dans lequel, pour actionner l'actionneur de carrossage (15), une unité d'évaluation (37) est affectée au dispositif de commande (29) qui, en cas de modification de l'état de charge (m_{z}, l_{z}), actionne l'actionneur de carrossage (15) pour empêcher au moins partiellement le réglage mécanique d'angle de carrossage au moyen d'un réglage actif d'angle de carrossage ou pour soutenir le réglage mécanique d'angle de carrossage, dans lequel
l'unité d'évaluation (27) détermine une courbe de carrossage d'actionneur (S_{A}) en fonction de l'état de charge actuel du véhicule, en ce que l'unité d'évaluation (37) imprime la courbe de carrossage d'actionneur (S_{A}) en actionnant l'actionneur de carrossage (15) de la courbe de carrossage mécanique (S_{M}), notamment en formant une courbe de carrossage globale (S_{G1}, S_{G2}), **caractérisé en ce que** pour déterminer l'état de charge actuel (m_{z}, l_{z}), des capteurs de charge (39) sont affectés à l'unité d'évaluation (37), au moyen desquels le poids du véhicule ou de la charge (m_{z}) et la position (lᵥ) du centre de gravité du véhicule ou de la charge peuvent être déterminés, qui peuvent être détectés comme paramètre d'entrée par l'unité d'évaluation (37) et sur la base desquels l'unité d'évaluation (37) détermine la courbe de carrossage d'actionneur (S_{A}), **en ce que** l'unité d'évaluation (37) détecte le débattement (d) comme paramètre d'entrée supplémentaire lorsque le véhicule est chargé ou déchargé, et **en ce que** l'unité d'évaluation (37) génère un signal d'angle de carrossage (S) sur la base du débattement (d) et de la courbe de carrossage d'actionneur (S_{A}), avec lequel l'actionneur de carrossage (15) peut être actionné.

2. Châssis actif selon la revendication 1, **caractérisé en ce que** le châssis présente une unité d'actionnement (31) qui agit entre la carrosserie de véhicule (7) et les éléments de guidage de roue, c'est-à-dire les supports de roue (1) ou les bielles (3, 5), qui peuvent être utilisés pour régler le niveau et/ou stabiliser le roulis de la carrosserie de véhicule (7), et **en ce que** l'unité d'actionnement (31) peut être actionnée par l'unité de commande de châssis (29), soit seule, soit en combinaison avec l'actionneur de carrossage (15).

3. Châssis actif selon la revendication 1 ou 2, **caractérisé en ce que** l'actionneur de carrossage (15) est affecté au support de roue (1), et **en ce que** le support de roue (1) est conçu en deux parties avec un élément de support (11) côté roue qui supporte la roue de véhicule (HR) et un élément de support (13) côté essieu qui est articulé sur la carrosserie de véhicule (7) par l'intermédiaire des bielles (3, 5), et **en ce que** l'actionneur de carrossage (15) est disposé entre les éléments de support (11, 13).

4. Châssis actif selon la revendication 3, **caractérisé en ce que** l'actionneur de carrossage (15) présente une partie rotative côté roue (17) et une partie rotative côté essieu (19), qui peuvent tourner l'une par rapport à l'autre autour de leurs axes de rotation (21, 23), et **en ce que** la partie rotative côté roue (17), lors de la rotation au moins d'une des parties rotatives (17, 19), peut être réglée dans un mouvement de va-et-vient par rapport à la partie rotative côté essieu (19), notamment avec un réglage de l'angle de carrossage, et **en ce que** les parties rotatives (17, 19) peuvent être mises en rotation par au moins un moteur électrique (27) qui peut être actionné par l'unité de commande (29).

5. Châssis actif selon la revendication 3, **caractérisé en ce que** l'actionneur de carrossage (15) est un actionneur linéaire ou une bielle active supportée entre le support de roue (1) et la carrosserie de véhicule (7), et **en ce que** l'actionneur linéaire est réglable en longueur de manière télescopique lorsqu'il est actionné par l'unité de commande de châssis (29).

6. Procédé de fonctionnement d'un châssis actif pour un véhicule à deux voies selon l'une quelconque des revendications précédentes.
